# EUROPÄISCHE PATENTANMELDUNG

(11) **EP 3 162 616 A1**
(43) Veröffentlichungstag der Anmeldung: **03.05.2017**
(21) Anmeldenummer: 16193089.6
(22) Anmeldetag: 10.10.2016
(51) Int. Cl.: B60N 2/08, B60N 2/12

(54) **LÄNGSEINSTELLER FÜR EINEN FAHRZEUGSITZ, FAHRZEUGSITZ**

(30) Priorität: 28.10.2015 DE 102015221079
(71) Anmelder: Johnson Controls Components GmbH & Co. KG, 67657 Kaiserslautern (DE)
(72) Erfinder: UTZINGER, Karl, 66919 Weselberg (DE); MIZERSKI, Piotr, 67657 Kaiserslautern (DE)

(57) **Zusammenfassung**

Längseinsteller (1) für einen ein Sitzteil (202) und eine Lehne (204) aufweisenden Fahrzeugsitz (200), wobei der Längseinsteller (1) eine erste Sitzschiene (2) und eine zweite Sitzschiene (4) aufweist, wobei die erste Sitzschiene (2) relativ zur zweiten Sitzschiene (4) in einer Längsrichtung (x) verschiebbar ist. Ferner ist eine der ersten Sitzschiene (2) zugeordnete und mit der zweiten Sitzschiene (4) zusammenwirkende Memory-Vorrichtung vorgesehen, welche dazu eingerichtet ist, eine Sitzlängsposition des Fahrzeugsitzes (200) zu speichern, die durch eine Längsverschiebung des Fahrzeugsitzes (200) verlassbar und wieder einnehmbar ist. Die Memory-Vorrichtung erfasst eine Relativbewegung zwischen der ersten Sitzschiene (2) und der zweiten Sitzschiene (4) mittels eines Reibrades (18), welches hierzu eine relativ zur Memory-Vorrichtung bewegte Kontaktfläche (4a) kontaktiert und abfährt. Die Memory-Vorrichtung gibt ferner bei einem Wiedereinnehmen einer gespeicherten Sitzlängsposition wenigstens einen Sperrriegel (90, 91) zur Überführung des Sperrriegels (90, 91) in eine Blockierstellung frei, welcher in einer Blockierstellung ein Verschieben der ersten Sitzschiene (2) relativ zur zweiten Sitzschiene (4) über die gespeicherte Sitzlängsposition hinaus verhindert. Ein Kraftfluss von dem in der Blockierstellung befindlichen Sperrriegel (90, 91) erfolgt über ein Adapterblech (102) in die erste Sitzschiene (2).

## Beschreibung

Die Erfindung betrifft einen Längseinsteller für einen Fahrzeugsitz, insbesondere Kraftfahrzeugsitz, mit den Merkmalen des Oberbegriffs des Anspruchs 1, sowie einen Fahrzeugsitz.

### Stand der Technik

Im Stand der Technik sind verschiedene Easy-Entry-Systeme bekannt, welche einen erleichterten Einstieg in eine zweite Sitzreihe eines Fahrzeuges ermöglichen. Das Easy-Entry-System ist durch einen Entriegelungshebel, welcher üblicherweise an einer Rückenlehne des Fahrzeugsitzes angeordnet ist, betätigbar, wodurch die Rückenlehne des Fahrzeugsitzes aus einem Einstiegsbereich schwenkt. Ist der Fahrzeugsitz auf Schienen angeordnet, kann der Fahrzeugsitz bei Betätigung des Entriegelungshebels zusätzlich oder alternativ in Fahrtrichtung aus dem Einstiegsbereich heraus verschiebbar sein.

In an sich bekannter Weise ermöglicht eine Easy-Entry-Verstellvorrichtung für einen Fahrzeugsitz eine Verstellbarkeit des Fahrzeugsitzes zwischen einer Gebrauchsposition und einer Easy-Entry-Position. Eine solche Verstellbarkeit ist insbesondere für solche Fahrzeuge besonders vorteilhaft, die lediglich eine Türe pro Fahrzeugseite haben. Beim Überführen des Fahrzeugsitzes von der Gebrauchsposition in die Easy-Entry-Position wird sowohl ein Lehnenbeschlag der Verstellvorrichtung, als auch eine Sitzlängsverriegelung der Verstellvorrichtung gelöst. Das Lösen des Lehnenbeschlags ermöglicht ein Verschwenken der Sitzlehne des Fahrzeugsitzes nach vorn in Richtung eines Sitzteils des Fahrzeugsitzes, während das Lösen der Sitzlängsverriegelung ein Vorschieben des gesamten Fahrzeugsitzes in Fahrtrichtung ermöglicht. Ein Fahrzeuginsasse erlangt somit Zugang zu den Rücksitzen des Fahrzeugs.

Aus der DE 102 02 179 A1 ist allgemein ein gattungsgemäßer Längseinsteller für einen Fahrzeugsitz bekannt, welcher eine Memory-Vorrichtung zur Erfassung einer relativen Sitzlängsverschiebung aufweist. Die Memory-Vorrichtung ist hierbei in einem inneren, zwischen einer ersten Sitzschiene und einer zweiten Sitzschiene gebildeten, Bauraum angeordnet und mit der ersten Sitzschiene verbunden. Die Memory-Vorrichtung weist ein mit der zweiten Sitzschiene in Eingriff bringbares Sperrelement auf, welches im Falle einer Betätigung der Sperrfunktion sämtliche auf das Sperrelement wirkenden Kräfte in die Memory-Vorrichtung einleitet.

Aus der DE 10 2011 105 598 A1 ist eine weitere beispielhafte Sitzschienenanordnung bekannt, welche eine Schiene, mindestens einen Schlittenmechanismus und einen Verriegelungsmechanismus aufweist.

### Aufgabe

Der Erfindung liegt die Aufgabe zu Grunde, einen Längseinsteller für einen Fahrzeugsitz der eingangs genannten Art zu verbessern, insbesondere eine Lastaufnahmefähigkeit einer Verriegelung des Längseinstellers durch eine Optimierung eines Kraftflusses in einem Belastungsfall in der Memory-Position zu erhöhen, insbesondere beim Abbremsen der ersten Sitzschiene relativ zur zweiten Sitzschiene beim Erreichen der Memory-Position, sowie einen entsprechenden Fahrzeugsitz bereitzustellen.

### Lösung

Diese Aufgabe wird erfindungsgemäß durch einen erfindungsgemäßen Längseinsteller für einen ein Sitzteil und eine Lehne aufweisenden Fahrzeugsitz, insbesondere einen Kraftfahrzeugsitz, gelöst, welcher eine erste Sitzschiene und eine zweite Sitzschiene aufweist, wobei die erste Sitzschiene in der zweiten Sitzschiene gelagert und relativ zur zweiten Sitzschiene in einer Längsrichtung verschiebbar ist, wobei eine der ersten Sitzschiene zugeordnete und mit der zweiten Sitzschiene zusammenwirkende Memory-Vorrichtung vorgesehen ist, welche dazu eingerichtet ist, eine Sitzlängsposition des Fahrzeugsitzes zu speichern, die durch eine Längsverschiebung des Fahrzeugsitzes verlassbar und wieder einnehmbar ist, wobei die Memory-Vorrichtung eine Relativbewegung zwischen der ersten Sitzschiene und der zweiten Sitzschiene mittels eines Reibrades erfasst, welches hierzu eine relativ zur Memory-Vorrichtung bewegte Kontaktfläche kontaktiert und abfährt, wobei die Memory-Vorrichtung bei einem Wiedereinnehmen einer gespeicherten Sitzlängsposition wenigstens einen Sperrriegel zur Überführung in eine Blockierstellung freigibt, welcher in einer Blockierstellung ein Verschieben der ersten Sitzschiene relativ zur zweiten Sitzschiene über die gespeicherte Sitzlängsposition hinaus verhindert.

Dadurch, dass ein Kraftfluss von dem Sperrriegel in der Blockierstellung über ein Adapterblech in die erste Sitzschiene erfolgt, lässt sich eine Belastung der Verriegelungsanordnung des Längseinstellers in vorteilhafter Weise mit einfachen Mitteln in die erste Sitzschiene einleiten. Ferner lässt sich mittels des Adapterblechs eine weiter vorteilhafte Steigerung der Lastaufnahmefähigkeit der Verriegelungsanordnung in einer Memory-Position erzielen. Das Adapterblech stellt aufgrund seiner Geometrie, sowie seiner Materialeigenschaften hierbei insbesondere eine elastische Verbindung zwischen dem Sperrriegel und der ersten Sitzschiene bereit.

Vorteilhafte Ausgestaltungen, welche einzeln oder in Kombination miteinander eingesetzt werden können, sind Gegenstand der Unteransprüche.

Der wenigstens eine Sperrriegel kann wenigstens teilweise von einem Riegelgehäuse umschlossen sein, insbesondere in dem Riegelgehäuse geführt sein. Das Riegelgehäuse kann ferner bevorzugt ebenfalls Teil des Kraftflusses zwischen dem wenigstens einen Sperrriegel und der ersten Sitzschiene, insbesondere zwischen dem wenigstens einen Sperrriegel und dem Adapterblech, sein.

Hierbei kann das Riegelgehäuse mittels des Adapterblechs mit der ersten Sitzschiene verbunden sein.

Zusätzlich kann der wenigstens eine Sperrriegel zum Einnehmen der Blockierstellung in eine Öffnung der zweiten Sitzschiene eingreifen. Hierdurch wird eine vorteilhafte und einfach ausgestaltete Verbindung zwischen dem Sperrriegel in der Blockierstellung und der zweiten Sitzschiene geschaffen, wodurch eine weitere Relativbewegung der ersten Sitzschiene relativ zur zweiten Sitzschiene, insbesondere in einer Bewegungsrichtung nach hinten über die Memory-Position hinaus, verhindert werden kann.

Ferner kann es vorgesehen sein, dass das Adapterblech eine erste Ausnehmung aufweist, um eine Flexibilität des Adapterblechs zu erhöhen. Die erste Ausnehmung kann hierzu im Wesentlichen in einer Längsrichtung des Adapterblechs, bzw. einer Längsrichtung des Längseinstellers orientiert sein.

Weiter kann die erste Ausnehmung zwischen einem Verbindungsbereich mit der ersten Sitzschiene und einem Verbindungsbereich mit dem Riegelgehäuse angeordnet sein. Anders ausgedrückt, ist die erste Ausnehmung des Adapterblechs außerhalb eines zur Verbindung mit dem Riegelgehäuse vorgesehenen Bereichs angeordnet, wodurch eine Schwächung des Verbindungsbereiches des Riegelgehäuses mit dem Adapterblech vermieden wird.

Weiter kann das Adapterblech eine zweite Ausnehmung aufweisen, um eine Flexibilität wenigstens eines Verbindungsbereichs des Riegelgehäuses mit dem Adapterblech zu erhöhen. Da der Sperrriegel in der Blockierstellung in einem Belastungszustand zwischen der sich in Relativbewegung zueinander befindlichen ersten Sitzschiene und der zweiten Sitzschiene verklemmt, wirken Scherkräfte auf den Sperrriegel in der Blockierstellung, wodurch das den wenigstens einen Sperrriegel umschließende Riegelgehäuse hautsächlich an einem vorderen unteren Abschnitt belastet. Demnach wirkt sich eine gezielte Erhöhung der Flexibilität eines Verbindungsbereichs im Bereich dieser vorderen unteren Kante vorteilhaft aus.

Die zweite Ausnehmung kann hierzu weiter vorteilhaft in einem Bereich des Adapterblechs zwischen zwei Verbindungsbereichen mit dem Riegelgehäuse angeordnet sein.

Ferner kann das Adapterblech einen abgewinkelten Abschnitt aufweisen, welcher den wenigstens einen Sperrriegel abschnittsweise abstützt. Der abgewinkelte Abschnitt kann derart ausgestaltet sein, dass er den wenigstens einen Sperrriegel im Bereich eines oberen Endabschnitts des Sperrriegels, insbesondere seitlich, abstützt.

Ferner kann es weiter vorgesehen sein, dass der wenigstens eine Sperrriegel in Richtung der Blockierstellung mittels eines Federelementes vorgespannt ist. Der wenigstens eine Sperrriegel kann parallel zu einer Vertikalrichtung geführt sein und somit unterstützt durch das Federelement von oben in die Blockierstellung hinein fallen.

Darüber hinaus kann eine Eingriffstiefe des wenigstens einen Sperrriegels in die Öffnung mittels eines Nockens und/oder eines Bolzen begrenzt sein.

Ferner kann ein Führungselement vorgesehen sein, mittels welchem der wenigstens eine Sperrriegel innerhalb eines Riegelgehäuses geführt ist. Das Riegelgehäuse ist an derselben Sitzschiene wie die Memory-Vorrichtung, bevorzugt an der ersten Sitzschiene, angeordnet.

Das Führungselement kann ferner an einer Seite des Riegelgehäuses, insbesondere von oben in das Riegelgehäuse, eingehangen und/oder eingeclipst sein.

Weiter kann das Führungselement einen außerhalb des Riegelgehäuses befindlichen Abschnitt aufweisen, welcher sich unter Belastung der Sperrriegel an zwei in Querrichtung gegenüberliegenden Teilbereichen der ersten Sitzschiene abstützt.

Ferner wird die Aufgabe mit einem Fahrzeugsitz, insbesondere einem Kraftfahrzeugsitz, gelöst, welcher ein Sitzteil, eine Lehne und einen mit dem Sitzteil verbundenen erfindungsgemäßen Längseinsteller gemäß der vorhergehenden Beschreibung umfasst.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Ansicht eines erfindungsgemäßen Fahrzeugsitzes in einem Grundzustand,
- Fig. 2:: eine schematische Seitenansicht eines erfindungsgemäßen Längseinstellers in einem Grundzustand,
- Fig. 3:: eine schematische Seitenansicht des Längseinstellers in einem einer aufgerichteten Lehne entsprechenden Zustand und angehobenem Betätigungshebel,
- Fig. 3a:: ein vergrößerter Ausschnitt von Fig. 3 mit teildurchsichtigen Elementen,
- Fig. 4:: eine schematische Seitenansicht des Längseinstellers in einem einer vorgeklappten Lehne entsprechenden Zustand,
- Fig. 4a:: ein vergrößerter Ausschnitt von Fig. 4 mit teildurchsichtigen Elementen,
- Fig. 5:: eine schematische Seitenansicht eines Getriebes des Längseinstellers in der Grundstellung,
- Fig. 6:: eine ausschnittsweise perspektivische Ansicht von oben auf das Getriebe des Längseinstellers,
- Fig. 7:: eine Explosionsdarstellung des Getriebes des Längseinstellers,
- Fig. 8:: eine schematische Ansicht eines Querschnitts des Längseinstellers entlang der Linie VIII-VIII von Fig. 9,
- Fig. 9: eine schematische Ansicht eines Längsschnitts des Längseinstellers entlang der Linie IX-IX von Fig. 8,
- Fig. 10:: eine perspektivische Ansicht von unten auf den gemäß dem Längsschnitt geöffneten Längseinsteller,
- Fig. 11a:: eine Explosionsdarstellung einer Verriegelungsanordnung des Längseinstellers,

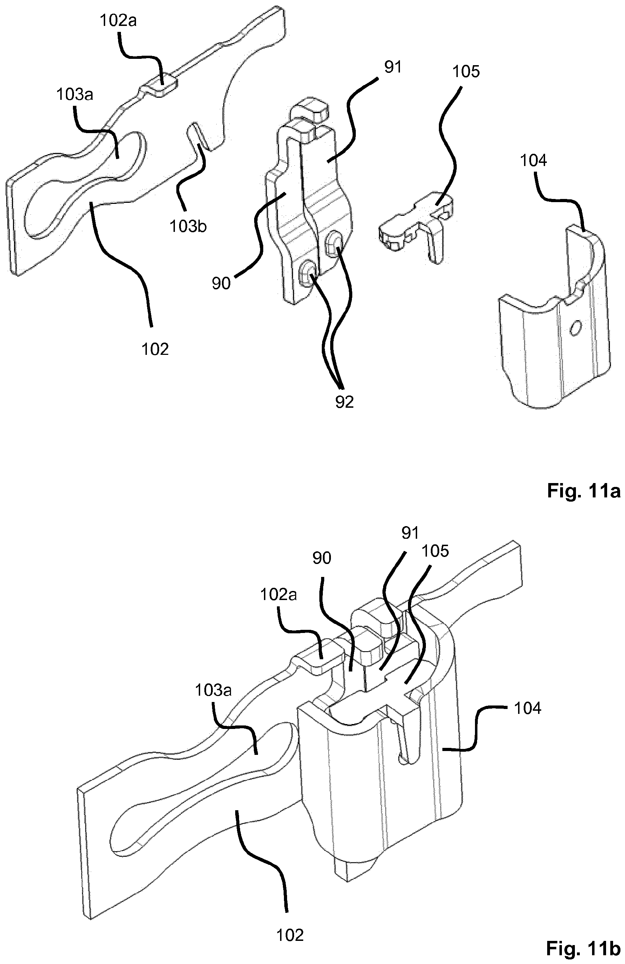

- Fig. 11 b:: eine perspektivische Ansicht der Verriegelungsanordnung,

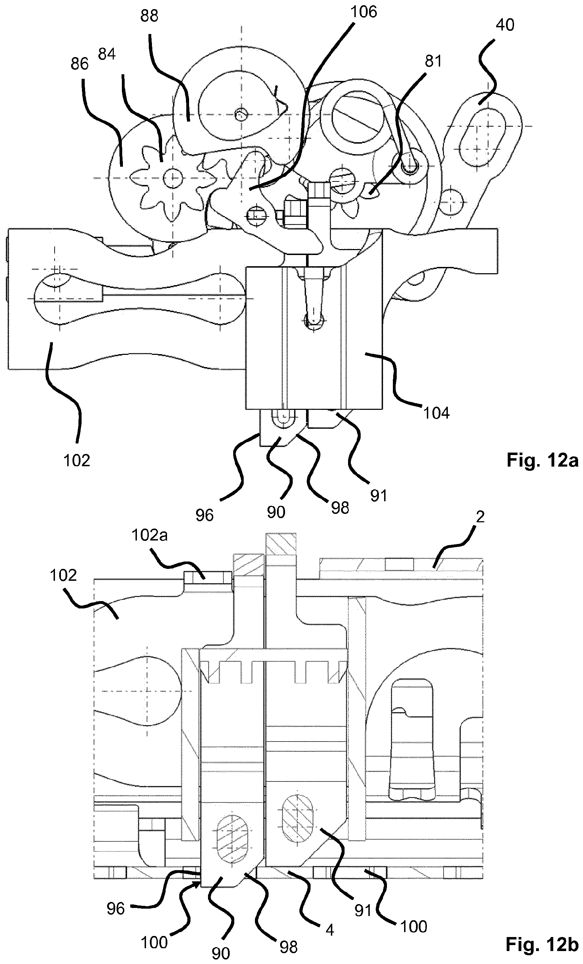

- Fig. 12a:: eine schematische Ansicht eines Längsschnitts des Längseinstellers mit einem Sperrriegel in einer Blockierstellung,
- Fig. 12b:: einen vergrößerten Ausschnitt von Fig. 12a,

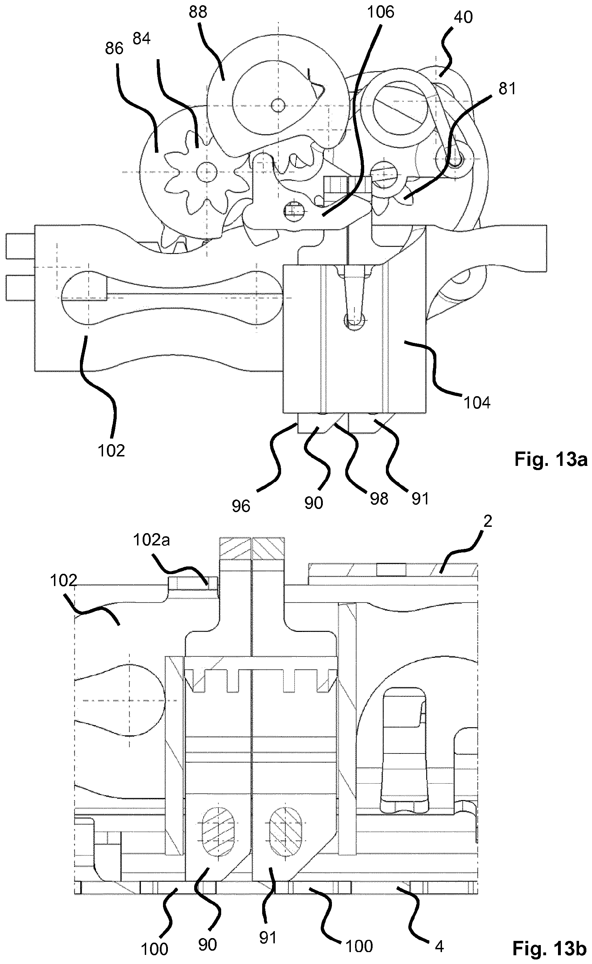

- Fig. 13a:: eine schematische Ansicht eines Längsschnitts des Längseinstellers in einem Zustand der Sperrriegel unmittelbar nach Verlassen der Memory-Position,
- Fig. 13b:: einen vergrößerten Ausschnitt von Fig. 13a,

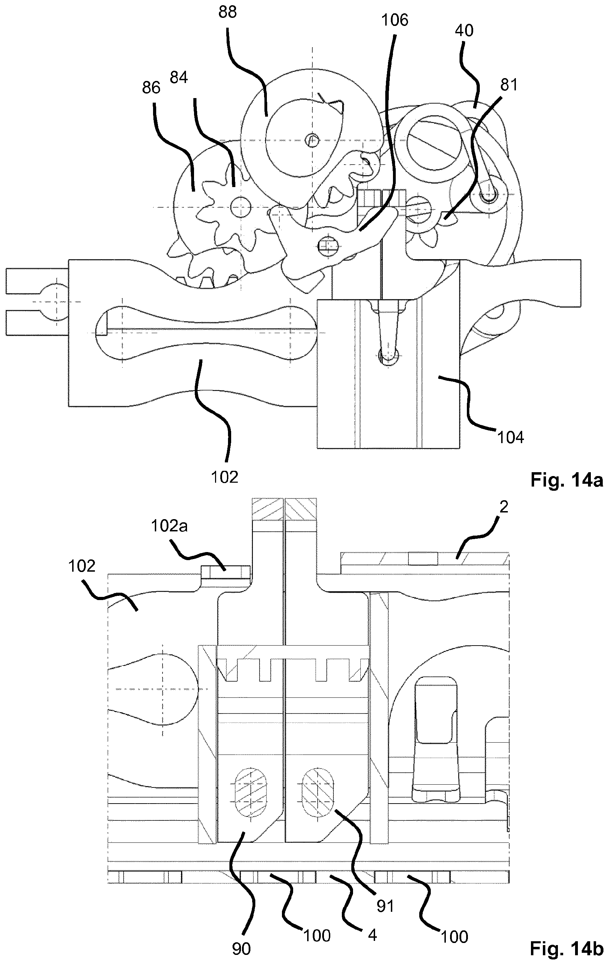

- Fig. 14a:: eine schematische Ansicht eines Längsschnitts des Längseinstellers in einem Zustand mit maximal angehobenen Sperrriegeln,
- Fig. 14b:: einen vergrößerten Ausschnitt von Fig. 14a,

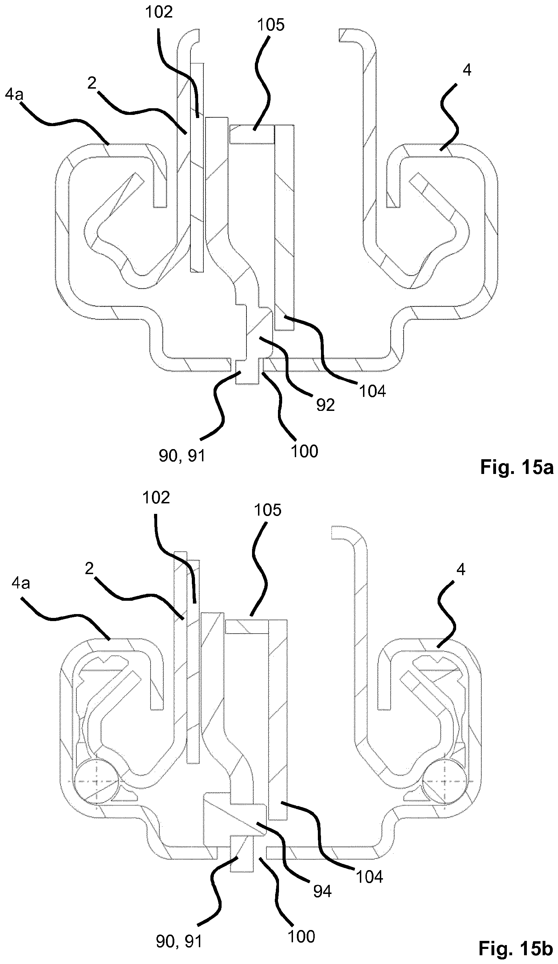

- Fig. 15a:: eine schematische Ansicht eines Querschnitts eines Längseinstellers,
- Fig. 15b:: eine schematische Ansicht eines Querschnitts eines Längseinstellers mit einer alternativen Ausgestaltung des Sperrriegels,

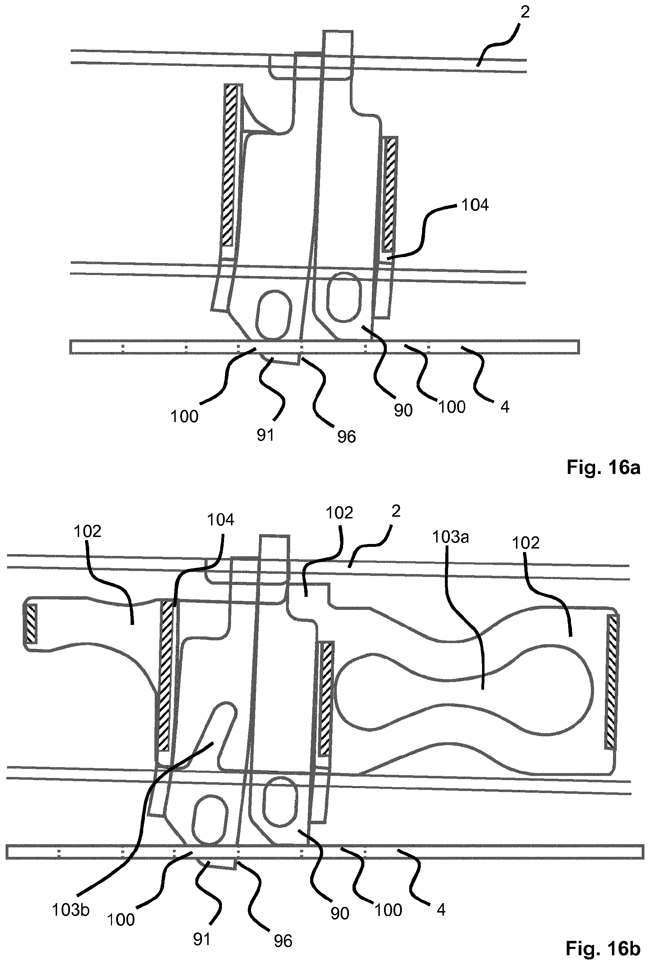

- Fig. 16a:: eine schematische Ansicht einer Verbindung eines Riegelgehäuses ohne Adapterblech,
- Fig. 16b:: eine schematische Ansicht einer Verbindung eines Riegelgehäuses mit Adapterblech,

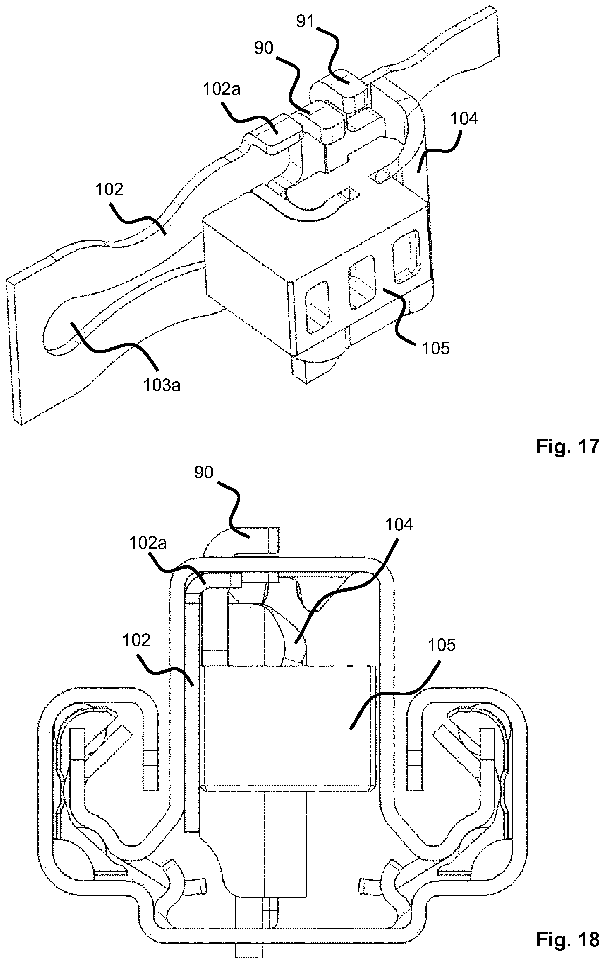

- Fig. 17:: eine perspektivische Ansicht der Verriegelungsanordnung mit einer alternativen Ausgestaltung des Führungselements, und
- Fig. 18:: eine schematische Ansicht eines Querschnitts des Längseinstellers mit der alternativen Ausgestaltung des Führungselements von Fig. 17.

Die Zeichnungen werden nachfolgend unter Verwendung von drei senkrecht zueinander verlaufenden Raumrichtungen beschrieben. Eine Längsrichtung x verläuft bei einem im Fahrzeug eingebauten Fahrzeugsitz 200 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 200 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 200 sitzenden Insassen in normaler Sitzposition, wobei der Fahrzeugsitz 200 im Fahrzeug eingebaut, in einer zur Personenbeförderung geeigneten Gebrauchsposition mit aufrecht stehender Lehne 204 und wie üblich in Fahrtrichtung ausgerichtet ist. Der Fahrzeugsitz 200 kann jedoch auch in abweichender Ausrichtung, beispielsweise quer zur Fahrtrichtung verbaut werden.

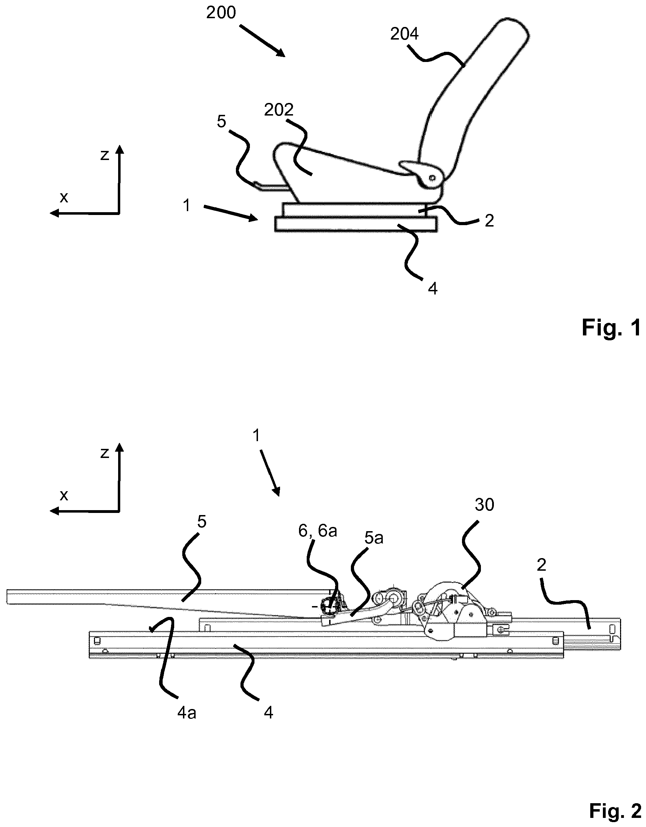

Der Fahrzeugsitz 200 ist in Fig. 1 in einer Gebrauchsstellung gezeigt, in welcher die Lehne 204 aufgerichtet ist. Der Fahrzeugsitz 200 ist auf einem Längseinsteller 1 montiert, wobei insbesondere ein Sitzteil 202 des Fahrzeugsitzes 200 mit dem Längseinsteller 1 verbunden ist. Der Längseinsteller 1 weist eine erste Sitzschiene 2, insbesondere eine Oberschiene 2, und eine zweite Sitzschiene 4, insbesondere eine Unterschiene 4, auf, relativ zu welcher die erste Sitzschiene 2 in Längsrichtung verschiebbar ist. Die Zuweisung der ersten Sitzschiene 2 und der zweiten Sitzschiene 4 jeweils zu der Oberschiene 2 oder der Unterschiene 4 ist lediglich beispielhaft und kann in alternativen Ausführungsformen variieren. Zur leichteren Erklärung der nachfolgenden Zeichnungen, werden nachfolgend die beschreibenderen Begriffe Oberschiene 2 und Unterschiene 4 verwendet.

Die Oberschiene 2 und die Unterschiene 4 bilden ein Schienenpaar. Vorzugsweise weist der Längseinsteller 1 zwei Schienenpaare auf, welche im Wesentlichen zu einer Mittelebene des Fahrzeugsitzes 200, die senkrecht zur Querrichtung y verläuft, symmetrisch angeordnet sind. Der Fahrzeugsitz 200 ist hierbei mit der Oberschiene 2 fest verbunden. Die Unterschiene 4 ist üblicherweise mit einem nicht dargestellten Fahrzeugboden und/oder einer Fahrzeugstruktur verbunden. Der Fahrzeugsitz 200 ist zusammen mit der sitzfesten Oberschiene 2 relativ zu der strukturfesten Unterschiene 4 parallel zur Längsrichtung x verschiebbar.

Fig. 2 zeigt den Längseinsteller 1 in einem Grundzustand. Der Grundzustand des gezeigten Längseinstellers 1 beschreibt jenen Zustand, wenn der Fahrzeugsitz 200 eine von dem Insassen voreingestellte Sitzlängsposition eingenommen hat und die Lehne 204 des Fahrzeugsitzes 200 aufgerichtet ist, und der Fahrzeugsitz 200 sich demnach in einer zur Personenbeförderung geeigneten Gebrauchsstellung befindet. Unter dem Begriff "Grundzustand" des Fahrzeugsitzes 200 oder des Längseinsteller 1 ist allgemein zu verstehen, dass der Grundzustand der entsprechend referenzierten Komponenten - sofern nicht explizit anderes definiert - stets einem Zustand entspricht, wenn sich der Fahrzeugsitz 200 in einer Gebrauchsstellung befindet und sich die Memory-Vorrichtung, insbesondere ein Getriebe 80 der Memory-Vorrichtung, in einem der Memory-Position entsprechenden Zustand befindet. Wird hierbei lediglich auf ein einzelnes Bauteil Bezug genommen, kann ebenfalls von einer Grundstellung gesprochen sein. Die Memory-Position entspricht hierbei einer zuvor eingestellten und gespeicherten Sitzlängsposition, welche durch ein Längsverschieben des Fahrzeugsitzes 200 verlassen und anschließend wieder eingenommen werden kann.

Die Memory-Vorrichtung wird anhand nachfolgender Zeichnungen eingehender beschrieben. Die Memory-Vorrichtung erfasst eine aus einer Längsverschiebung des Fahrzeugsitzes resultierende Relativbewegung zwischen der Oberschiene 2 und der Unterschiene 4 mittels eines Reibrades 18 und eines Getriebes 80. Eine zwischen der Oberschiene 2 und der Unterschiene 4 wirkende Schienenverriegelung ist mittels eines Betätigungshebels 5a entriegelbar, wobei ein Vorklappen der Lehne 204 des Fahrzeugsitzes 200 wenigstens mittelbar auf den Betätigungshebel 5a wirkt, um die Schienenverriegelung zu entriegeln. Unter einer "Schienenverriegelung" im Sinne der vorliegenden Erfindung wird allgemein verstanden, dass die Schienenverriegelung in an sich bekannter Weise dazu eingerichtet ist, eine Bewegung der ersten Sitzschiene in Längsrichtung relativ zur zweiten Sitzschiene verhindert und ferner dazu dient den Fahrzeugsitz in einer Mehrzahl unterschiedlicher Sitzlängspositionen zu arretieren.

Eine von dem Längseinsteller 1 grundsätzlich bereitgestellte Funktion zum Einstellen der Sitzlängsposition des Fahrzeugsitzes 200 ist mittels eines Handgriffs 5, welcher wie dargestellt an einer Übertragungsstange 6 angeordnet ist, betätigbar. Ferner ist der Betätigungshebel 5a an der Übertragungsstange 6 angeordnet, welcher dazu eingerichtet ist, auf eine nicht dargestellte Schienenverriegelung des Schienenpaares, insbesondere beider Schienenpaare, des Längseinstellers 1 zu wirken, um dieses zu entriegeln und den Fahrzeugsitz 200 entsprechend parallel zur Längsrichtung x verfahren und/oder verschieben zu können. Der Betätigungshebel 5a ist beispielsweise mittels einer Schweißverbindung mit der Übertragungsstange 6 verbunden und mit dieser zusammen über eine gemeinsame Drehachse 6a drehbar an der Oberschiene 2 gelagert. Der Betätigungshebel 5a kann ferner einteilig mit dem Handgriff 5 ausgebildet sein. Die Übertragungsstange 6 dient der gleichzeitigen Betätigung und Entriegelung einer Schienenverriegelung eines gleichfalls aus Oberschiene 2 und Unterschiene 4 bestehenden Sitzschienenpaares eines weiteren Längseinstellers 1, welches an einer gegenüberliegenden Seite des Fahrzeugsitzes 200 vorgesehen sein kann.

Ferner ist die Memory-Vorrichtung eingerichtet, einer Easy-Entry-Funktion zu dienen und beim Betätigen derselben mittels des Getriebes 80 eine Längsverschiebung, bzw. eine Relativbewegung der Oberschiene 2 relativ zur Unterschiene 4 längenmäßig zu erfassen und im Falle eines wiederholten Einnehmens der Memory-Position eine weitere Längsverschiebung zu blockieren, insbesondere mittels eines Sperrriegels 90, 91 zu blockieren. Um das Getriebe 80 vor Verschmutzung oder sonstiger nachteiliger Funktionsbeeinflussung zu schützen, ist das Getriebe 80 bevorzugt mit einem Getriebegehäuse 30 verdeckt, welches in Fig. 2 dargestellt ist. Die Memory-Position entspricht hierbei der - gegebenenfalls auch als solche bezeichneten - "gespeicherten Sitzlängsposition" und ist nachfolgend als synonym verwendet.

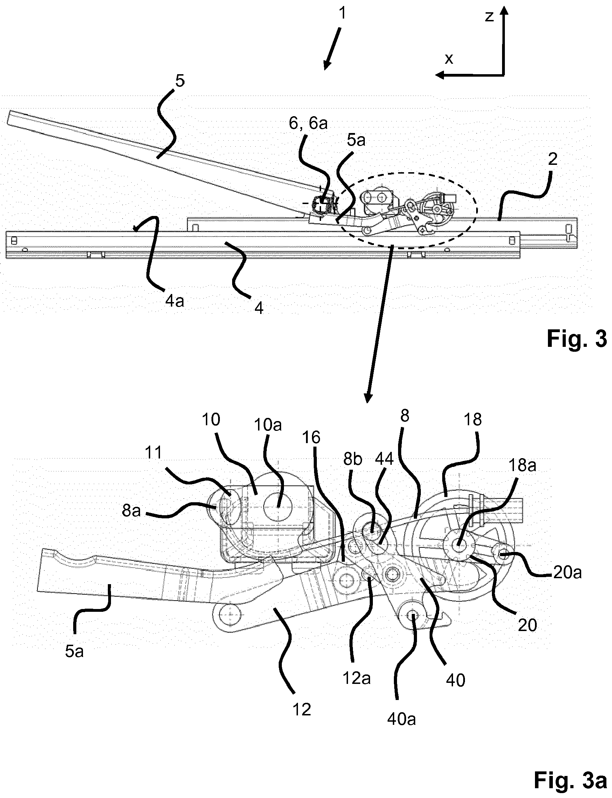

In Fig. 3 ist der Längseinsteller 1 in einem Zustand dargestellt, welcher durch ein Anheben des Handgriffs 5 durch den Insassen herbeigeführt werden kann, ohne dass die Lehne 204 des Fahrzeugsitzes 200 vorgeklappt ist. Fig. 3a zeigt einen vergrößerten Ausschnitt von Fig. 3 mit teildurchsichtigen Elementen. Dieser Zustand wird beispielsweise eingenommen, wenn der Insasse den Fahrzeugsitz 200 von der aktuellen Sitzlängsposition in eine abweichende, geänderte Sitzlängsposition verstellen möchte. Die geänderte Sitzlängsposition entspricht dann einer neuen gespeicherten Sitzlängsposition.

Bei einem Anheben des Handgriffs 5 durch den Insassen erfolgt eine Entriegelung des Längseinstellers 1, insbesondere ein Entriegeln oder Öffnen der Schienenverriegelung, wodurch die Oberschiene 2 für eine Relativbewegung zur Unterschiene 4 freigegeben wird. Hierbei verschwenkt der Betätigungshebel 5a um die Drehachse 6a der Übertragungsstange 6 und betätigt hierbei einen Resethebel 12, welcher um eine Drehachse 12a des Resethebels 12 drehbar gelagert ist. Der Resethebel 12 wird bei einer Betätigung durch den Betätigungshebel 5a um die Drehachse 12a gedreht und hebt mit einem dem Betätigungshebel 5a gegenüberliegenden Ende ein auf einer Reibradschwinge 20 gelagertes Reibrad 18 von einer Kontaktfläche 4a der Unterschiene 4 ab. Das Reibrad 18 ist um eine Drehachse 18a des Reibrades 18 auf der Reibradschwinge 20 gelagert, wobei die Reibradschwinge 20 um eine Drehachse 20a der Reibradschwinge 20 verschwenkbar ist. Durch das Abheben des Reibrades 18 von der Kontaktfläche 4a wird das Reibrad 18, bzw. eine von der Memory-Vorrichtung gespeicherte Sitzlängsposition oder eine erfasste Relativbewegung, auf einen Nullwert oder definierten Ausgangswert zurückgesetzt. Die Memory-Vorrichtung weist hierzu eine in den Figuren nicht dargestellte auf das Reibrad 18, bzw. bevorzugt auf das Getriebe 80 wirkende Rückstellfeder auf.

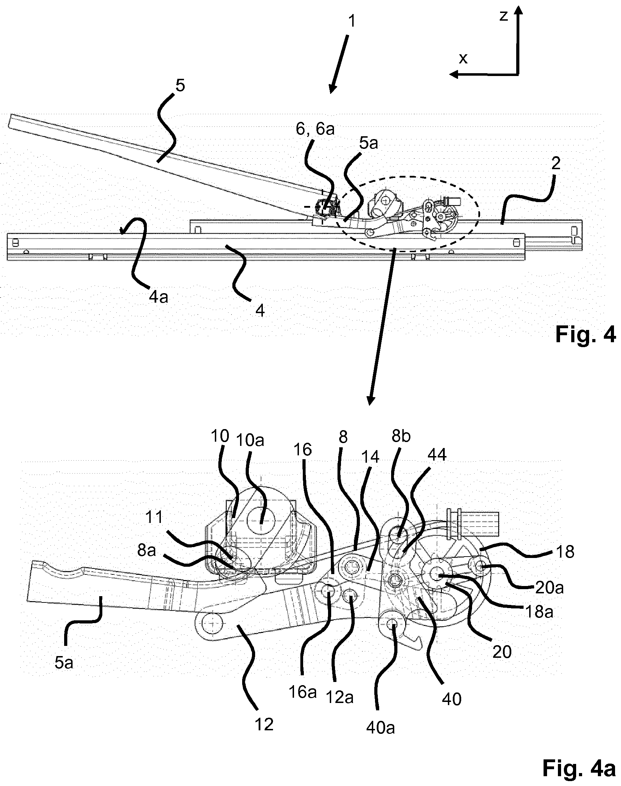

In Fig. 4 ist der Längseinsteller 1 in einem Zustand dargestellt, welcher durch ein Vorklappen der Lehne 204 des Fahrzeugsitzes 200 herbeigeführt werden kann. Fig. 4a zeigt einen vergrößerten Ausschnitt von Fig. 4 mit teildurchsichtigen Elementen. Die Lehne 204 ist mittels eines Bowdenzuges 8 mit dem Längseinsteller 1 wirkverbunden. Der dargestellte Zustand wird beispielsweise eingenommen, wenn der Fahrzeugsitz 200 in eine sogenannte Easy-Entry-Stellung überführt wird. Eine Überführung des Fahrzeugsitzes 200 in die Easy-Entry-Stellung dient bekanntermaßen der Schaffung von ausreichend Platz zum leichteren Einsteigen in eine hintere Sitzreihe eines Kraftfahrzeuges.

Der Bowdenzug 8 weist ein Bowdenzugende 8a auf, welches an einer Seilrolle 10 gehalten ist. Die Seilrolle 10 ist um eine Drehachse 10a der Seilrolle 10 drehbar gelagert. Die Seilrolle 10 weist einen Hebelarm 11 auf, welcher bei einer Drehung der Seilrolle 10 derart auf den Betätigungshebel 5a wirkt, dass der Betätigungshebel 5a um die Drehachse 6a der Übertragungsstange 6 verschwenkt wird und hierdurch die Schienenverriegelung des Längseinstellers 1 entriegelt wird.

Der Bowdenzug 8 weist ferner einen zum Bowdenzugende 8a beabstandeten Bowdenzugnippel 8b auf, welche in einem Langloch 44 eines Steuerhebels 40 geführt ist. Der Steuerhebel 40 ist um eine Drehachse 40a drehbar gelagert und mittels einer Getriebeanordnung verbunden. Die Getriebeanordnung weist vorliegend eine Koppel 14 und ein Achsträgerelement 16 auf. Die Koppel 14 verbindet das Achsträgerelement 16 mit dem Steuerhebel 40. Das Achsträgerelement 16 ist um eine Drehachse 16a drehbar gelagert und stellt ferner eine Lagerung des Resethebels 12 um die Drehachse 12a bereit.

Wird nun die Lehne 204 des Fahrzeugsitzes 200 ausgehend von der Gebrauchsstellung vorgeklappt, um den Fahrzeugsitz 200 in die Easy-Entry-Stellung zu überführen, bewegt der Bowdenzug 8 mittels des Bowdenzugnippels 8b den Steuerhebel 40 um die Drehachse 40a des Steuerhebels 40 und zeitgleich die Seilrolle 10 um die Drehachse 10a der Seilrolle 10. Hieraus resultierend verursacht die Schwenkbewegung des Steuerhebels 40 mittels der Koppel 14 ein Verschwenken des Achsträgerelements 16 um die Drehachse 16a des Achsträgerelements 16, wodurch sich ebenfalls die Drehachse 12a des Resethebels 12 um die Drehachse 16a des Achsträgerelements 16 bewegt. Die Drehachse 12a des Resethebels 12 wird hierbei derart verlagert, dass der Resethebel 12, welcher zeitgleich durch den über den Hebelarm 11 an der Seilrolle 10 betätigten Betätigungshebel 5a verschwenkt wird, mit seinem dem Betätigungshebel 5a gegenüber liegenden Ende das Reibrad 18 nicht von der Unterschiene 4 abheben kann. Anders ausgedrückt, wird, bei einer Entriegelung des Längseinstellers 1 durch ein Vorklappen der Lehne 204, der Resethebel 12 mittels des Betätigungshebels 5a betätigt und zeitgleich durch den Steuerhebel 40 außer Wirkverbindung mit dem Reibrad 18 gebracht.

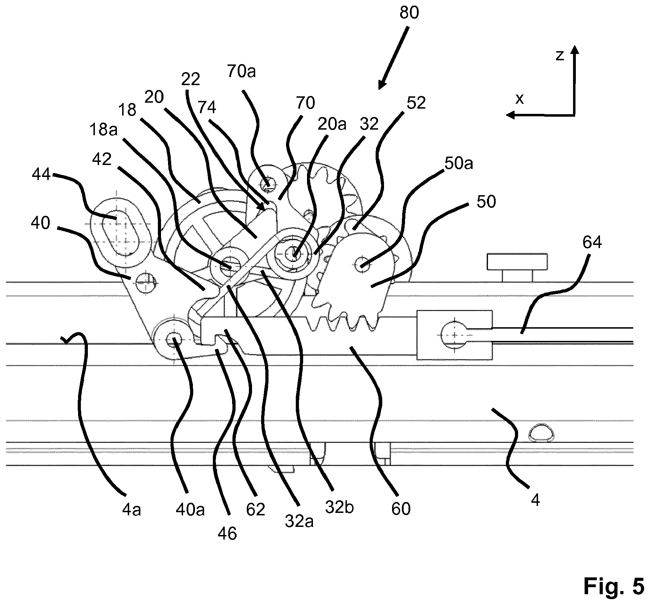

In Fig. 5 ist das Getriebe 80 des Längseinstellers 1 in einer Seitenansicht dargestellt. Die gezeigte Stellung der gezeigten Bauteile des Getriebes 80 des Längseinstellers 1 entspricht einem Grundzustand des Getriebes 80. Das Getriebe 80 ist bevorzugt ortsfest zur Oberschiene 2 angeordnet. Das Reibrad 18 kontaktiert die Kontaktfläche 4a der Unterschiene 4. Der Steuerhebel 40 weist eine Nase 42 auf, an welcher sich ein erstes Federende 32a einer Schenkelfeder 32 abstützt. Die Schenkelfeder 32 ist an einem die Drehachse 20a umschließenden Abschnitt der Reibradschwinge 20 angeordnet und ebenfalls um die Drehachse 20a der Reibradschwinge 20 gelagert, insbesondere um die Drehachse 20a herumgeführt. Ein zweites Federende 32b der Schenkelfeder 32 stützt sich an einem weiteren Abschnitt der Reibradschwinge 20 im Bereich der Drehachse 18a des Reibrades 18 ab. Hierbei erzeugt die Schenkelfeder 32 eine Anpresskraft, mit welcher das Reibrad 18 auf die Kontaktfläche 4a der Unterschiene 4 gedrückt wird. In der Grundstellung ist die Anpresskraft bevorzugt derart dimensioniert, dass es vermieden wird, dass das Reibrad 18, aufgrund einer Vibration des Kraftfahrzeuges selbst oder aufgrund von Fahrbahnunebenheiten, anfängt zu klappern oder von der Kontaktfläche 4a abzuheben.

Der Steuerhebel 40 steht ferner mit einer ebenfalls um die Drehachse 40a gelagerten Klinke 46 in Verbindung, welcher mit einem Haken 62 einer Zahnstange 60 in Eingriff ist. Die Klinke 46 ist hierzu im Wesentlichen freilaufend und lediglich in einer Bewegungsrichtung auf Mitnahme mit dem Steuerhebel 40 gekoppelt. Die Zahnstange 60 ist mit einem weiteren Bowdenzug 64 verbunden, welcher auf eine nicht dargestellte Verriegelungsvorrichtung eines die Lehne 204 mit dem Sitzteil 202 des Fahrzeugsitzes 200 verbindenden Rastbeschlages wirken kann, um die Lehne 204 in einer vorgeklappten Stellung zu verriegeln und erst wieder freizugeben, wenn der Längseinsteller 1 wieder die gespeicherte Sitzlängsposition eingenommen hat. Dies kann als Easy-Entry-Komfort-Funktion bezeichnet werden. Unter einer "Easy-Entry-Komfort-Funktion" im Sinne der Erfindung soll allgemein verstanden werden, dass eine zur Überführung eines Fahrzeugsitzes in eine Easy-Entry-Stellung vorgeklappte Lehne des Fahrzeugsitzes in der vorgeklappten Stellung arretierbar ist, so dass ein Aufrichten der Lehne außerhalb einer Memory-Position, ohne eine explizite manuelle Aufhebung der Arretierung, verhindert ist. Die Zahnstange 60 weist abschnittsweise eine Verzahnung auf, welche mit einem Zahnsegment 50, welches um eine Drehachse 50a drehbar gelagert ist, in Eingriff steht. Das Zahnsegment 50 weist ferner einen aus einer Umfangsfläche des Zahnsegments 50 vorstehenden Nocken 52 auf.

Darüber hinaus ist ein Rückstellhebel 70 vorgesehen, welcher um eine Drehachse 70a drehbar gelagert ist. Der Rückstellhebel 70 weist ein Nocken 72 auf, welcher bei einem Verschwenken des Rückstellhebels 70 mit dem Nocken 52 des Zahnsegments 50 in Wirkverbindung bringbar ist. Der Rückstellhebel 70 weist ferner ein Langloch 74 auf, in welchem eine Nase 22 der Reibradschwinge 20 aufgenommen ist.

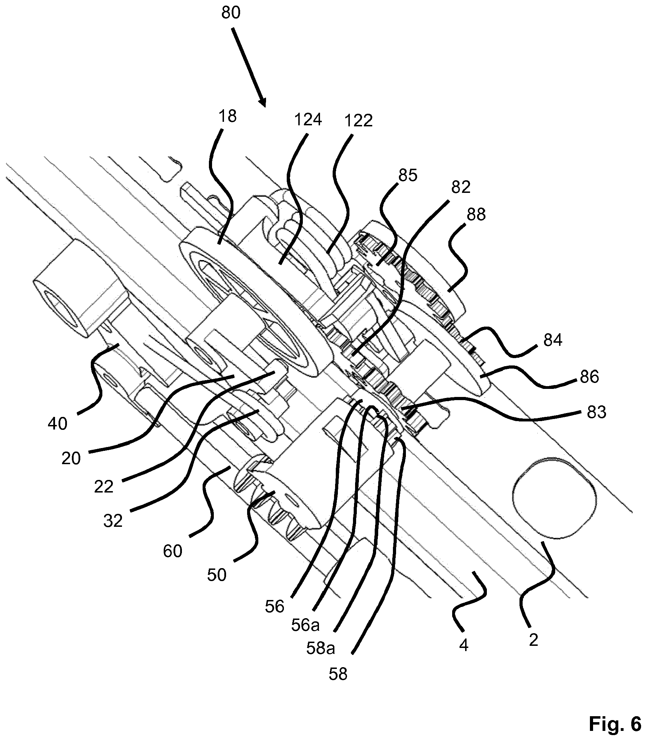

In Fig. 6 ist das Getriebe 80 des Längseinstellers 1 in einer perspektivischen Ansicht von oben dargestellt. Hierbei ist erkennbar, dass das Zahnsegment 50 in Wirkverbindung mit dem Getriebe 80 der Memory-Vorrichtung steht.

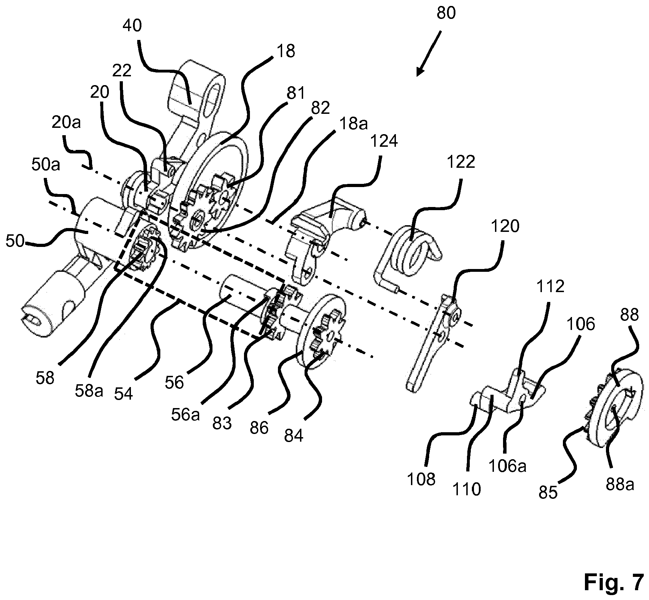

In Fig. 7 ist eine Explosionsdarstellung des Getriebes 80 des Längseinstellers 1 gezeigt. Hierbei ist im Detail erkennbar, dass das Getriebe 80 ein erstes Zahnrad 81 umfasst, welches ebenfalls um die Drehachse 18a des Reibrades 18 drehbar gelagert und mit dem Reibrad 18 rotationsfest gekoppelt ist. Das erste Zahnrad 81 treibt ein zweites Zahnrad 82 an, welches fluchtend mit der Drehachse 20a der Reibradschwinge 20 drehbar gelagert ist. Das zweite Zahnrad 82 treibt ein drittes Zahnrad 83 an, welches um die Drehachse 50a des Zahnsegments 50 drehbar angeordnet ist. Mit dem dritten Zahnrad 83 drehfest verbunden und ebenfalls um die Drehachse 50a drehbar gelagert ist eine erste Konturscheibe 86, sowie ein viertes Zahnrad 84. Das vierte Zahnrad 84 treibt ein fünftes Zahnrad 85 an, welches mit einer zweiten Konturscheibe 88 drehfest verbunden ist und um eine Drehachse drehbar gelagert ist. Das Zahnsegment 50 ist vorliegend mittels einer Spindel-Mutter-Anordnung 54 mit dem Getriebe 80, insbesondere mit dem dritten Zahnrad 83 des Getriebes 80 verbunden.

Weiter ist eine ebenfalls um die Drehachse 20a verschwenkbare Zusatzschwinge 124 vorgesehen, welche eine der Reibradschwinge 20 gegenüberliegende Lagerstelle für das Reibrad 18 und das erste Zahnrad 81 bereitstellt. Die Zusatzschwinge 124 ist somit an eine Stellung und Bewegung der Reibradschwinge 20 um die Drehachse 20a gekoppelt. Die Zusatzschwinge 124 stellt ferner einen ersten Abstützpunkt für ein erstes Ende einer Entsperrfeder 122 bereit, welche vorliegend als Schenkelfeder ausgestaltet ist. Die Entsperrfeder 122 greift mit einem zweiten Ende an einem zweiten Abstützpunkt an einem Entsperrhebel 120 an, welcher um die Drehachse 20a drehbar gelagert ist. Bei einem Verschwenken der Zusatzschwinge 124, beispielsweise durch ein Anheben des Reibrades 18 mittels des Resethebels 12, wirkt der Entsperrhebel 120 bei einer durch die Entsperrfeder 122 eingeleiteten Bewegung um die Drehachse 20a auf einen Abschnitt 108 eines Entriegelungshebels 106. Der Entriegelungshebel 106 ist um eine Drehachse 106a drehbar gelagert und dazu eingerichtet, auf einen oder mehrere Sperrriegel 90, 91 zu wirken, um die Sperrriegel 90, 91 in eine entriegelte Stellung zu bewegen und in dieser zu halten. Ferner weist der Entriegelungshebel 106 einen ersten Nocken 110 und einen zweiten Nocken 112 auf, welche jeweils mit einer der Ausnehmungen der ersten Konturscheibe 86 oder der zweiten Konturscheibe 88 zusammenwirken.

Anhand der Figuren 6 und 7 werden nachfolgend der Aufbau und die allgemeine Funktionsweise des Getriebes 80 und einer auf diesem basierenden beispielhaften Memory-Vorrichtung beschrieben. Hierbei ist das Reibrad 18 gezeigt, welches zur Erfassung einer Längsverschiebung der an der Oberschiene 2 angeordneten Memory-Vorrichtung relativ zur Kontaktfläche 4a der Unterschiene 4 bewegt wird. Alternativ kann das Reibrad 18 auch durch ein Zahnrad in Verbindung mit einer an der Kontaktfläche 4a angeordneten Zahnstange, bzw. einer Gegenverzahnung ersetzt werden.

Eine Rotationsbewegung des Reibrades 18 entspricht demnach der Längsverschiebung. Das Reibrad 18 ist zusammen mit dem ersten Zahnrad 81 drehfest zueinander auf der gemeinsamen Drehachse 18a angeordnet. Das erste Zahnrad 81 steht in Eingriff mit dem zweiten Zahnrad 82, welches wiederum das dritte Zahnrad 83 antreibt. Das dritte Zahnrad 83 ist zusammen mit dem vierten Zahnrad 84 drehfest zueinander um eine gemeinsame Drehachse 50a angeordnet. Ferner dient die Drehachse 50a zu Lagerung einer ersten Konturscheibe 86. Das vierte Zahnrad 84 steht in Eingriff mit dem fünften Zahnrad 85, welches zusammen mit einer zweiten Konturscheibe 88 um eine nicht dargestellte Drehachse gelagert ist, welche bevorzugt von dem Getriebegehäuse 30 bereitgestellt sein kann. Die Drehachse 20a und die Drehachse 50a sind bevorzugt ebenfalls in vorgesehenen Lagerungen des Getriebegehäuses 30 gelagert.

Die Radien der Zahnräder 81 bis 85 sind derart gewählt, dass eine stufenweise Untersetzung der Rotationsbewegung des Reibrades 18 erfolgt, so dass eine Drehung von mehr als 360° des fünften Zahnrades 85, welches allgemein dem letzten Zahnrad entspricht, vorgesehen ist, wobei hierbei die Drehung der Konturscheiben 86, 88 relativ zueinander abgestimmt sind, so dass eine gemeinsame Ausrichtung der Konturscheiben 86, 88 entsprechend einem Drehwinkel von 0° ausschließlich in der Memory-Position gewährleistet ist. Es sind jedoch ebenso weitere, auf einem Getriebe 80 basierende, Memory-Vorrichtungen denkbar, deren Zahnräder 81 bis 85 derart angepasst sind, dass eine stufenweise Untersetzung der Rotationsbewegung des Reibrades 18 erfolgt, so dass entsprechend einer maximal möglichen Längsverschiebung das fünfte Zahnrad 85 maximal eine volle Umdrehung, bevorzugt etwas weniger als eine volle Umdrehung, ausführt. Vorliegend weist das erste Zahnrad 81 einen kleineren Radius als das die Längsverschiebung aufnehmende Reibrad 18 auf. Das erste Zahnrad 81 weist ferner einen kleineren Radius als das zweite Zahnrad 82 auf. Das zweite Zahnrad 82 weist ferner einen größeren Radius als das dritte Zahnrad 83 auf. Das dritte Zahnrad 83 weist einen annähernd gleichen Radius wie das vierte Zahnrad 84 auf. Das vierte Zahnrad 84 weist einen kleineren Radius als das fünfte Zahnrad 85 auf.

Ferner ist zur Bereitstellung einer sogenannten Reset-Funktion, mittels welcher das Getriebe 80 wieder in den Grundzustand bringbar ist, eine nicht dargestellte Resetfeder vorgesehen. Die Resetfeder greift hierzu beispielsweise an einem der Zahnräder 81 bis 85 an und dreht das Getriebe 80 sowie die mit dem Getriebe 80 verbundenen Konturscheiben 86, 88 in die Grundstellung zurück, welche das Getriebe 80 und die Konturscheiben 86, 88 in der gespeicherten Sitzlängsposition aufweisen. Die Resetfeder kann beispielsweise in Form einer Spiralfeder ausgestaltet sein. Die Resetfeder stützt sich bevorzugt zwischen einem Zahnrad 81 bis 85 oder einem mit einem der Zahnräder 81 bis 85 drehfest verbundenen Bauteil und an einem gehäusefesten Abschnitt ab. Die Resetfeder wird bevorzugt bei einem Verschieben der Oberschiene 2 von der Drehung des entsprechenden Zahnrades 81 bis 85 vorgespannt. Wenn anschließend das Getriebe 80 durch Anheben des Reibrades 18 mittels der Resethebels 12 außer Kontakt mit der Kontaktfläche 4a gebracht wird, bewirkt ein Entspannen der vorgespannten Resetfeder ein Rückstellen des Getriebes 80, anders ausgedrückt bewirkt es einen Reset des Getriebes 80.

In Bezug auf die Figuren 6 und 7 wird nachfolgend die Funktion der Spindel-Mutter-Anordnung 54 eingehender beschrieben. Die Spindel-Mutter-Anordnung 54 ist um die Drehachse 50a drehbar angeordnet. Die Spindel -Mutter-Anordnung 54 umfasst eine in dem Zahnsegment 50 axial verschieblich gelagerte Mutter 58, welche an ihrer dem Zahnsegment 50 abgewandten Stirnseite einen Anschlag 58a aufweist. Ferner umfass die Spindel-Mutter-Anordnung 54 eine ein Außengewinde aufweisende Spindel 56, welche in ein Innengewinde der Mutter 58 einschraubbar ist. Die Spindel 56 weist einen Mitnehmer 56a auf, welcher bei entsprechender Einschraubtiefe der Mutter 58 mit dem Anschlag 58a in Eingriff bringbar ist. Die Spindel 56 steht stirnseitig mit dem dritten Zahnrad 83 des Getriebes 80 in Verbindung, so dass eine der Längsverschiebung der Oberschiene 2 entsprechende Rotationsbewegung übertragen wird.

Die Mutter 58 ist über ein Innengewinde mit dem Außengewinde der Spindel 56 in Eingriff. Ferner weist die Mutter 58 auf der Außenseite eine koaxial zur Drehachse 50a orientierte Außenverzahnung auf. Diese Außenverzahnung der Mutter 58 ist in einer entsprechend ebenfalls koaxial zur Drehachse 50a orientierten Innenverzahnung eines Abschnitts eines Zahnsegments 50 in entsprechend dieser koaxialen Richtung geführt.

Die Mutter 58 ist durch die Verbindung ihrer Außenverzahnung mit der Innenverzahnung des Abschnitts des Zahnsegments 50 in einer Rotation relativ zum Zahnsegment 50 gehemmt und lediglich axial verschieblich in dem Zahnsegment 50 geführt. Bei einer Längsverschiebung der Oberschiene 2 relativ zur Unterschiene 4 von der Memory-Position weg, dreht sich die Spindel 56 um die Drehachse 50a, so dass der Mitnehmer 56a von dem Anschlag 58a der Mutter 58 weg gedreht wird. Da hierbei die Zahnstange 60 von dem Steuerhebel 40 freigegeben ist, folgt der Anschlag 58a der Mutter 58, aufgrund einer Kraftbeaufschlagung durch den Bowdenzug 64 auf das Zahnsegment 50, zunächst der Rotation des Mitnehmers 56a der Spindel 56 bis zu einer Endstellung des Zahnsegmentes 50. Dem nachfolgend entfernt sich der Mitnehmer 56a von dem Anschlag 58a. Die Mutter 58 bewegt sich hierbei entsprechend ihrer Verbindung mit einem Außengewinde der Spindel 56 von dem Mitnehmer 56a weg.

Erfolgt anschließend eine Verschiebung des Fahrzeugsitzes 1 zurück in Richtung der Memory-Position, wird das dritte Zahnrad 83 in umgekehrter Drehrichtung angetrieben und die Mutter 58 schraubt sich wieder über das Außengewinde der Spindel 56 in Richtung des Mitnehmers 56a. Gelangt die Mutter 58 mit dem Anschlag 58a wieder kurz vor Erreichen der Memory-Position, insbesondere entsprechend der letzten 60° bis 90°-Drehung der Spindel 56, in Kontakt mit dem Mitnehmer 56a, wird die Mutter 58 sowie das Zahnsegment 50 von der Spindel 56 in eine gleichgerichtete Rotationsbewegung gezwungen, welche die Zahnstange 60 wieder in Richtung des Steuerhebels 40 bewegt.

Die Zahnstange 60 dient einer Bereitstellung einer Easy-Entry-Komfort-Funktion, die mittels dem Steuerhebel 40 freigebar ist. Der Bowdenzug 64 ist mit einem dem Steuerhebel 40 abgewandten Ende der Zahnstange 60 verbunden. Wird, nach dem Vorklappen der Lehne 204 und einem hierdurch bewirkten Entriegeln der Schienenverriegelung des Längseinstellers 1, der Fahrzeugsitz 200 aus einer Memory-Position in eine Easy-Entry-Stellung verfahren, so wird eine auf die Zahnstange 60 wirkende von dem Getriebe 80 über die Spindel-Mutter-Anordnung 54 und das Zahnsegment 50 ausgeübte Gegenzugkraft reduziert. Die Gegenzugkraft dient in der Memory-Position zum Ausgleich einer an der Zahnstange 60 mittels des Bowdenzuges 64 angreifenden Schließkraft einer Verriegelung zur Arretierung der vorgeklappten Lehne 204. Durch das reduzieren der Gegenzugkraft mittels der Spindel-Mutter-Anordnung 54 wird die Zahnstange 60 bewegt und betätigt hierbei mittels des Bowdenzugs 64 die Verriegelung zur Arretierung der vorgeklappten Lehne 204. Folglich ist die Lehne 204 hierdurch in der vorgeklappten Stellung arretiert und die Schienenverriegelung des Längseinstellers 1 bleibt ebenfalls weiter über die Betätigung durch den Bowdenzug 8 entriegelt. Der Fahrzeugsitz 200 ist in diesem Zustand parallel zur Längsrichtung x nach vorne frei verschiebbar.

Nimmt der Fahrzeugsitz 200 anschließend wieder die Memory-Position ein, wird die Zahnstange 60 kurz vor Erreichen der Memory-Position abermals von dem Getriebe 80 über die Spindel-Mutter-Anordnung 54 und das Zahnsegment 50 angetrieben, jedoch in entgegengesetzter Richtung als zuvor. Dieser Bewegung der Zahnstange 60 folgend gibt der Bowdenzug 64 die Verriegelung zur Arretierung der vorgeklappten Lehne 204 wieder frei, und die Lehne 204 kann beim Erreichen der Memory-Position wieder aufgerichtet werden, so dass der Fahrzeugsitz 200 wieder die Gebrauchsstellung einnimmt und durch das Aufrichten der Lehne 204 und das entsprechende nachgeben des Bowdenzuges 8 die Schienenverriegelung des Längseinstellers 1 wieder verriegeln kann.

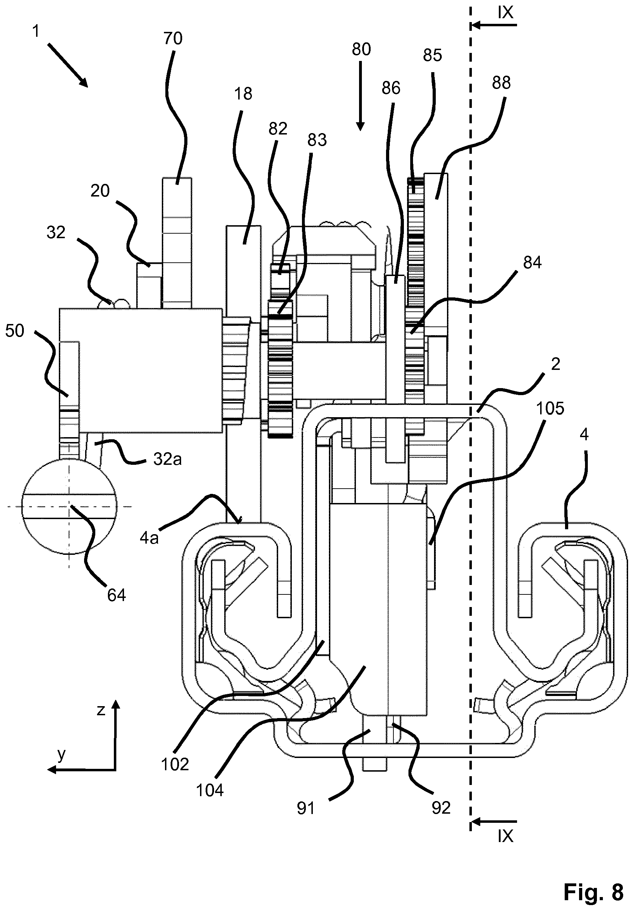

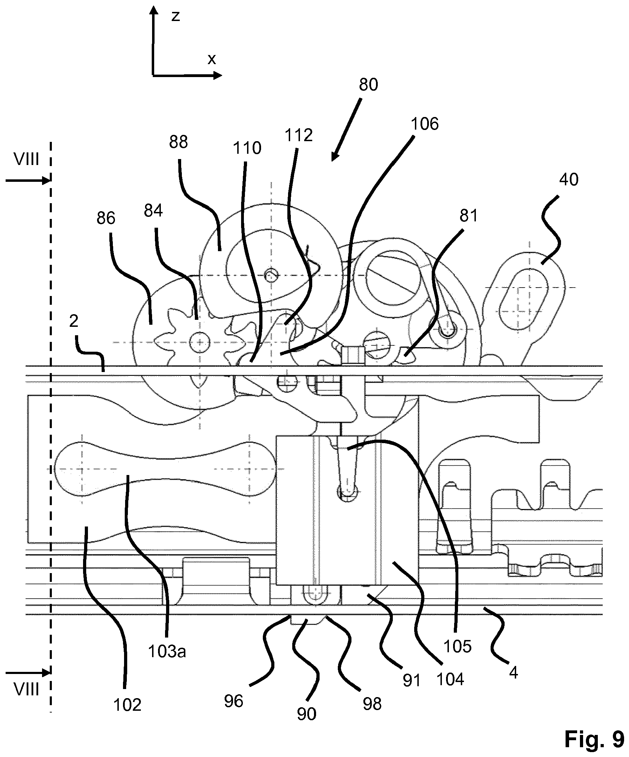

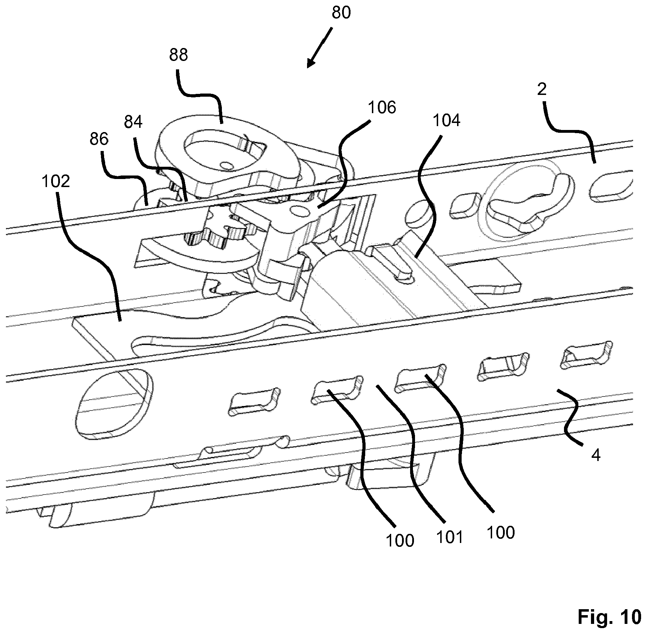

Die Figuren 8 bis 10 zeigen den Längseinsteller 1 in weiteren Blickwinkeln und werden nachfolgend gemeinsam beschrieben. Um, bei einer Längsverschiebung des Fahrzeugsitzes ausgehend von einer Easy-Entry-Stellung in Richtung der Memory-Position, ein Überfahren der Memory-Position zu vermeiden, weist die Memory-Vorrichtung einen ersten Sperrriegel 90 und einem zweiten Sperrriegel 91 auf, welche in Vertikalrichtung z linear verschieblich angeordnet sind. Wenn der Fahrzeugsitz 200 die Memory-Position erreicht, greift wenigstens einer der vorgesehenen Sperrriegel 90, 91 von oben in eine Öffnung 100 eines Lochbildes der Unterschiene 4 ein. Das Lochbild kann hierbei integral in der Unterschiene 4, oder aber in einer in der Unterschiene 4 angeordneten Rastleiste ausgebildet sein. In den Figuren 8 und 9 ist der erste Sperrriegel 90 in eine der Öffnungen 100 der Unterschiene 4 eingefallen, wobei der erste Sperrriegel 90 in einer maximalen Eingriffstiefe mittels des Nocken 92 des ersten Sperrriegels 90 begrenzt ist. Der zweite Sperrriegel 91 liegt währenddessen an einem in einem Bereich zwischen zwei benachbarten Öffnungen 100 der Unterschiene 4 gebildeten Steg 101 auf. Dadurch, dass zwei Sperrriegel 90, 91 vorgesehen sind, welche abwechselnd in eine der Mehrzahl an Öffnungen 100 eingreifen, lässt sich in Verbindung mit den vorgegebenen Abständen der Mehrzahl an Öffnungen 100 des Lochbildes der Unterschiene 4 ein erhöhtes Inkrement der einrastbaren Positionen erzielen. Die Sperrriegel 90, 91 weisen an ihrem den Öffnungen 100 der Unterschiene 4 zugewandten Endabschnitten jeweils eine Sperrkontur 96 und eine dieser gegenüberliegenden und nach vorne ausgerichteten Anlaufkontur 98 auf. Die Sperrriegel 90, 91 sind mittels eines aus darstellungstechnischen Gründen nicht gezeigten Federelements in Richtung einer in eine Öffnung 100 eingreifende Stellung vorgespannt. Die Sperrriegel 90, 91 sind vorliegend innerhalb eines Riegelgehäuses 104 angeordnet und mittels eines von oben eingeführten Führungselements 105 in Vertikalrichtung z verschieblich geführt. Das Riegelgehäuse 104 ist an einem Adapterblech 102 befestigt, welches wiederum an der Oberschiene 2 fixiert ist. Das Adapterblech 102 weist eine im Wesentlichen in Längsrichtung x orientierte erste Ausnehmung 103a auf.

Während einer Veränderung der Sitzlängsposition aus der Memory-Position heraus und anschließend wieder in diese hinein, wird das Reibrad 18 durch die Relativbewegung über die Kontaktfläche 4a der Unterschiene 4 angetrieben. Die Rotation des Reibrades 18 um die Drehachse 18a wird das Getriebe 80 angetrieben. Das Getriebe 80 bildet das Wegmesssystem und steuert die Sperrriegel 90, 91 an.

In der Darstellung von Fig. 9 ist weiter zu erkennen, dass der erste Nocken 110 in eine Ausnehmung der ersten Konturscheibe 86 und der zweite Nocken 112 in eine Ausnehmung der zweiten Konturscheibe 88 eingelassen ist. In diesem Grundzustand weisen die erste Konturscheibe 86 und auch die zweite Konturscheibe 88 einen übereinstimmenden Drehwinkel von 0° auf. Der Entriegelungshebel 106 übt keine Kraft entgegen einer auf die Sperrriegel 90, 91 wirkenden Federkraft aus. Dies entspricht dem Grundzustand in der gespeicherten Sitzlängsposition, bzw. der Memory-Position ohne eine erfolgte Längsverschiebung.

Bei einer nun beginnenden Längsverschiebung der Oberschiene 2 relativ zur Unterschiene 4 aus der Memory-Position in Richtung der Easy-Entry-Stellung und entsprechend des Reibrades 18 relativ zur Kontaktfläche 4a wird die Längsverschiebung in eine Drehbewegung aller Zahnräder 81 bis 85 des Getriebes 80 umgesetzt. Hierbei treibt die erste Konturscheibe 86 den ersten Nocken 110 in einer im Wesentlichen nach unten gerichteten Bewegung aus der Ausnehmung der ersten Konturscheibe 86 heraus. Dies bewirkt eine Schwenkbewegung des Entriegelungshebels 106 um die Drehachse 106a. Die Drehung der ersten Konturscheibe 86 erfolgt hierbei, entsprechend der Untersetzung des Getriebes 80, mit einer höheren Winkelgeschwindigkeit als die Drehung der zweiten Konturscheibe 88.

Sind der erste Nocken 110 und der zweite Nocken 112 vollständig aus den jeweiligen Ausnehmungen der ersten Konturscheibe 86 und der zweiten Konturscheibe 88 ausgetreten, hat der Entriegelungshebel 106 die Sperrriegel 90, 91 vollständig in die entriegelte Stellung bewegt. Hierbei wird der Entriegelungshebel 106 zunächst mittels der ersten und zweiten Konturscheibe 86, 88 und des entsprechenden ersten und zweiten Nockens 110, 112 in dieser entriegelnden Stellung gehalten. Erfolgt eine weitere Längsverschiebung und eine entsprechende weitere Rotation der ersten Konturscheibe 86, verliert der erste Nocken 110 im Bereich der Ausnehmung der ersten Konturscheibe 86 den Kontakt zur ersten Konturscheibe 86 und der Entriegelungshebel 106 wird lediglich über seinen Kontakt mittels des zweiten Nockens 112 zur zweiten Konturscheibe 88 in der entriegelnden Stellung gehalten.

Erfolgt anschließend eine Längsverschiebung des Fahrzeugsitzes 200 zurück in Richtung der gespeicherten Sitzlängsposition, sind die zuvor beschriebenen Zustände und Bewegungsabfolgen in umgekehrter Reihenfolge zu betrachten. Unmittelbar bei Erreichen der Memory-Position sind die erste Konturscheibe 86 und die zweite Konturscheibe 88 mit ihren jeweiligen Ausnehmungen wieder derart zueinander ausgerichtet, dass der erste Nocken 110 und der zweite Nocken 112 des Entriegelungshebels 106 in die jeweiligen Ausnehmungen der Konturscheiben 86, 88 eingreifen können, wodurch der um die Drehachse 106a verschwenkbare Entriegelungshebel 106 freigegeben wird. Hierdurch werden die Sperrriegel 90, 91 durch die auf sie wirkende Federkraft in Richtung der Unterschiene 4 bewegt und wenigstens einer der Sperrriegel 90, 91 in die der Memory-Position entsprechende Öffnung 100 der Unterschiene 4 getrieben, so dass die Oberschiene 2 nicht weiter relativ zur Unterschiene 4 verschoben werden kann. Hierbei bewegen die Sperrriegel 90, 91 den Entriegelungshebel 106 um die Drehachse 106a mit, dass der erste Nocken 110 in die Ausnehmung der ersten Konturscheibe 86 und entsprechend der zweite Nocken 112 in die Ausnehmung der zweiten Konturscheibe 88 eintreten.

Eine Verriegelungsanordnung des Längseinstellers 1 ist in Fig. 11 a in einer Explosionsdarstellung und in Fig. 11 b in einem zusammengesetzten Zustand gezeigt. Das Adapterblech 102 weist eine Breite auf, welche größer ist als eine Breite eines an dem Adapterblech 102 fixierbaren Riegelgehäuses 104, bevorzugt um mehr als das Zweifache größer. Das Adapterblech 102 weist abschnittsweise eine erste Ausnehmung 103a auf, welche sich im Wesentlichen in Längsrichtung x des Adapterblechs 102, sowie auch der Oberschiene 2 erstreckt. Die erste Ausnehmung 103a ist vorliegend achssymmetrisch zu einer parallel zur Längsrichtung x orientierten Mittelachse des Adapterblechs 102 ausgestaltet. Ferne kann das Adapterblech 102 im Bereich der ersten Ausnehmung 103a wie vorliegend dargestellt eine an die Form der ersten Ausnehmung 103a angepasste Außenkontur aufweisen. Weiter ist eine zweite Ausnehmung 103b vorgesehen, welche bevorzugt in einem Bereich zwischen zwei Verbindungsbereichen des Riegelgehäuses 104 und dem Adapterblech 102 angeordnet ist. Die zweite Ausnehmung 103b ist bevorzugt in eingebautem Zustand in der Richtung der Öffnungen 100 der Unterschiene 4 orientiert und nach außen hin geöffnet. Das Adapterblech 102 weist ferner im Bereich der oberen Enden der Sperrriegel 90, 91 einen abgewinkelten Abschnitt 102a auf, welcher als seitliche Führung für den ersten Sperrriegel 90 dient. Der zweite Sperrriegel 91 stützt sich insbesondere in einer gemeinsamen Kontaktebene an dem ersten Sperrriegel 90 ab. Die erste Ausnehmung 103a ist bevorzugt seitlich dem Riegelgehäuse 104 und in Belastungsrichtung, also in eingebautem Zustand in Richtung einer Rückseite des Fahrzeugsitzes 200, angeordnet. Das Führungselement 105 ist vorgesehen, um die Sperrriegel 90, 91 zwischen dem Riegelgehäuse 104 und dem Adapterblech 102 entlang eines vorgegebenen Weges zu führen.

Die Darstellung von Fig. 12a zeigt einen Längsschnitt des Längseinstellers 1 mit dem ersten Sperrriegel 90 in einer Blockierstellung, in welcher sich der Fahrzeugsitz 200 in der Memory-Position befindet und die Lehne 204 aufgerichtet ist. Fig. 12b zeigt einen vergrößerten Ausschnitt von Fig. 12a. Der erste Sperrriegel 90 ist in die Öffnung 100 der Unterschiene 4 eingefallen. Bereits während des Abklappens der Lehne 204 kann ab einem gewissen Grad der Verstellung des Steuerhebels 40 der Fahrzeugsitz 200 nach vorne verschoben werden. Der hierbei noch teilweise in der Öffnung 100 der Unterschiene 4 eingefallene Sperrriegel 90 wird mittels der am Rand der Öffnung 100 anliegenden Anlaufschräge 98 bei der Längsverschiebung aus der Öffnung 100 herausgeschoben. Der Zustand der Sperrriegel 90, 91, nachdem der erste Sperrriegel 90 durch die Längsverschiebung aus der Öffnung 100 der Unterschiene 4 herausgeschoben wurde, ist in den Figuren 13a, 13b dargestellt. Das Reibrad 18 treibt durch die Relativbewegung zwischen Oberschiene 2 und Unterschiene 4 das Getriebe 80 an, welches wiederum mittels der ersten Konturscheibe 86 und der zweiten Konturscheibe 88 den Entriegelungshebel 106 ansteuert. Das beschriebene Herausschieben des Sperrriegels 90 erfolgt schneller als ein aktives Entriegeln mittel des Entriegelungshebels 106, wodurch die zwei Sperrriegel 90, 91 zwischenzeitlich außer Kontakt mit dem Entriegelungshebel 106 gelangen, bis dieser durch die Längsverschiebung des Fahrzeugsitzes 200 in einer Hubbewegung nachgefolgt ist und wieder mit den Sperrriegeln 90, 91 in Kontakt gelangt und diese weiter von der Verriegelungsstellung entfernt.

Der Entriegelungshebel 106 bewegt die Sperrriegel 90, 91 in einer aufwärts gerichteten Bewegung, bis die Sperrriegel 90, 91 von dem Entriegelungshebel 106 in dem in den Figuren 14a, 14b dargestellten, maximal angehobenem Zustand gehalten werden. Der Entriegelungshebel 106 hält die Sperrriegel 90, 91 in dieser Stellung bis der Fahrzeugsitz 200 wieder in die Memory-Position zurück verschoben ist. Unmittelbar bei Erreichen der Memory-Position sind die erste Konturscheibe 86 und die zweite Konturscheibe 88 mit ihren jeweiligen Ausnehmungen wieder derart zueinander aufgerichtet, dass der erste Nocken 110 und der zweite Nocken 112 des Entriegelungshebels 106 in die Ausnehmungen der Konturscheiben 86, 88 eingreifen können, wodurch der Entriegelungshebel 106 derart um die Drehachse 106a verschwenkt, dass die Sperrriegel 90, 91 wieder nach unten in Richtung der Unterschiene 4 bewegt werden und wenigstens einer der Sperrriegel 90, 91 in die der Memory-Position entsprechende Öffnung 100 der Unterschiene 4 einfällt.

In den Figuren 15a, 15b ist jeweils ein Querschnitt eines Längseinstellers 1 gezeigt, wobei Fig. 15a eine beispielhafte Ausführungsform des ersten Sperrriegels 90 gemäß den bisherigen Zeichnungen und Fig. 15b eine alternative Ausführungsform des Sperrriegels 90 zeigt. Die jeweilige Ausführungsform des dargestellten ersten Sperrriegels 90 betrifft bevorzugt den nicht sichtbaren zweiten Sperrriegel 91 gleichermaßen. Ferner ist der erste Sperrriegel 90 gemäß der alternativen Ausführungsform ebenso mit dem Längseinsteller 1 gemäß der vorhergehenden Beschreibung kombinierbar. Der erste Sperrriegel 90 weist gemäß Fig. 15a im unteren Bereich einen Nocken 92 auf, welcher zur unteren Wegbegrenzung und zur seitlichen Führung des ersten Sperrriegels 90 dient. Vorliegend ist der Nocken 92 aus dem Material des ersten Sperrriegels 90 ausgeprägt und/oder ausgeformt. Die in Fig. 15b gezeigte alternative Ausführungsform des Sperrriegels 90 weist im unteren Bereich einen Bolzen 94 auf, welcher den Nocken 92 gleichwirkend ersetzt. Der Bolzen 94 kann hierbei allgemein auch als ein Niet oder eine Schraube ausgebildet sein.

In Fig. 16a ist eine unmittelbare Verbindung eines Riegelgehäuses 104 mit der Oberschiene 2 skizzenhaft gezeigt. Die schraffiert dargestellten Bereiche stellen die Verbindungsbereiche zwischen dem Riegelgehäuse 104 und der Oberschiene 2 dar. Ferner entspricht die Darstellung einem belasteten Zustand, in dem der zweite Sperrriegel 91 in eine Öffnung 100 der Unterschiene 4 eingefallen ist und den Längseinsteller 1 an einem Überfahren der Memory-Position hindert. Vergleichbar zeigt Fig. 16b eine mittelbare Verbindung des Riegelgehäuses 104 über ein Adapterblech 102 mit der Oberschiene 2. Die unterschiedlich schraffierten Bereiche stellen jeweils die Verbindungbereiche zwischen dem Riegelgehäuse 104 und dem Adapterblech 102, bzw. zwischen dem Adapterblech 102 und der Oberschiene 2 dar. Allgemein können die jeweils in den Verbindungsbereichen zu verbindenen Bauteile mittels Schweißen, Nieten oder Schrauben, verbunden sein. Im vorliegenden Beispiel wird von einer Schweißverbindung ausgegangen.

Die Lage und Dimensionierung der jeweiligen Verbindungsbereiche sowie die Formgebung des Adapterblechs 102 ermöglichen ein elastisches Nachgeben im Belastungsfall. Dies führt zu einer Verringerung der Kräfte, die beim Abstoppen des Längseinstellers 1 in der Memory-Position auf die Sperrriegel 90, 91 und das Riegelgehäuse 104 einwirken. Versuche haben hierbei gezeigt, dass die Belastung des - in diesem Falle - zweiten Sperrriegels 91 der Anordnung gemäß Fig. 16b in einem erfassten Zeitverlauf langsamer bis zu einer maximalen Belastung ansteigt, als vergleichsweise bei der Anordnung gemäß Fig. 16a. Dadurch wird ferner die Lastaufnahmefähigkeit der Anordnung gesteigert.

In Fig. 17 ist die Verriegelungsanordnung des Längseinstellers 1 mit einem Führungselement 105 gemäß einer alternativen Ausführungsform gezeigt. Fig. 18 zeigt die Verriegelungsanordnung von Fig. 17 in einem in den Längseinsteller 1 eingebauten Zustand. Das Führungselement 105 gemäß der alternativen Ausführungsform umgreift das Riegelgehäuse 104 abschnittsweise in Richtung einer Hauptbelastung beim Abstoppen in der Memory-Position, wodurch eine Lastaufnahmefähigkeit der gezeigten Verriegelungsanordnung erhöht ist. Ferner ist das Führungselement 105 derart dimensioniert, dass es in eingebautem Zustand den Abstand zwischen dem Adapterblech 102 und dem gegenüberliegenden Abschnitt der Oberschiene 2 im Wesentlichen ausfüllt und sich im Belastungsfall an dem gegenüberliegenden Abschnitt flächig abstützen kann. Somit lässt sich ein seitliches Ausbrechen der in Fig. 18 gezeigten Verriegelungsanordnung im Belastungsfall verhindern und die Lastaufnahmefähigkeit weiterhin erhöhen.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Längseinsteller
- 2: Oberschiene
- 4: Unterschiene
- 4a: Kontaktfläche (der Unterschiene)
- 5: Betätigungshebel
- 6: Übertragungsstange
- 6a: Drehachse (der Übertragungsstange)
- 8: Bowdenzug
- 8a: Bowdenzugende
- 8b: Bowdenzugnippel
- 10: Seilrolle
- 10a: Drehachse (der Seilrolle)
- 11: Hebelarm (der Seilrolle)
- 12: Resethebel
- 12a: Drehachse (des Resethebels)
- 14: Koppel
- 16: Achsträgerelement
- 16a: Drehachse (des Achsträgerelements)
- 18: Reibrad
- 18a: Drehachse (des Reibrades)
- 20: Reibradschwinge
- 20a: Drehachse (der Reibradschwinge)
- 22: Nase (der Reibradschwinge)
- 30: Getriebegehäuse
- 32: Federelement / Schenkelfeder
- 32a: erstes Federende
- 32b: zweites Federende
- 40: Steuerhebel
- 40a: Drehachse (des Steuerhebels)
- 42: Nase (des Steuerhebels)
- 44: Langloch (des Steuerhebels)
- 46: Klinke (des Steuerhebels)
- 50: Zahnsegment
- 50a: Drehachse (des Zahnsegments)
- 52: Nocken (des Zahnsegments)
- 54: Spindel-Mutter-Anordnung
- 56: Gewindespindel
- 56a: Mitnehmer
- 58: Mutter
- 58a: Anschlag
- 60: Zahnstange
- 62: Haken (der Zahnstange)
- 64: weiterer Bowdenzug
- 70: Rückstellhebel
- 70a: Drehachse (des Rückstellhebels)
- 72: Nocken (des Rückstellhebels)
- 74: Langloch (des Rückstellhebels)
- 80: Getriebe
- 81: erstes Zahnrad
- 82: zweites Zahnrad
- 83: drittes Zahnrad
- 84: viertes Zahnrad
- 85: fünftes Zahnrad
- 86: erste Konturscheibe
- 88: zweite Konturscheibe
- 88a: Drehachse (der zweiten Konturscheibe)
- 90: erster Sperrriegel
- 91: zweiter Sperrriegel
- 92: Nocken (des Sperrriegels)
- 94: Bolzen (des Sperrriegels)
- 96: Sperrkontur (des Sperrriegels)
- 98: Anlaufkontur (des Sperrriegels)
- 100: Öffnung (der Unterschiene)
- 102: Adapterblech
- 102a: abgewinkelter Abschnitt (des Adapterblechs)
- 103a: Ausnehmung (des Adapterblechs)
- 103b: Ausnehmung (des Adapterblechs)
- 104: Riegelgehäuse
- 105: Führungselement
- 106: Entriegelungshebel
- 106a: Drehachse (des Entriegelungshebels)
- 108: Abschnitt (des Entriegelungshebels)
- 110: erster Nocken (des Entriegelungshebels)
- 112: zweiter Nocken (des Entriegelungshebels)
- 120: Entsperrhebel
- 120a: Drehachse (des Entsperrhebels)
- 122: Entsperrfeder
- 124: Zusatzschwinge
- 200: Fahrzeugsitz
- 202: Sitzteil
- 204: Lehne

- x: Längsrichtung
- y: Querrichtung
- z: Vertikalrichtung

## Patentansprüche

1. Längseinsteller (1) für einen ein Sitzteil (202) und eine Lehne (204) aufweisenden Fahrzeugsitz (200), insbesondere einen Kraftfahrzeugsitz, wobei der Längseinsteller (1) eine erste Sitzschiene (2) und eine zweite Sitzschiene (4) aufweist, wobei die erste Sitzschiene (2) relativ zur zweiten Sitzschiene (4) in einer Längsrichtung (x) verschiebbar ist, wobei eine der ersten Sitzschiene (2) zugeordnete und mit der zweiten Sitzschiene (4) zusammenwirkende Memory-Vorrichtung vorgesehen ist, welche dazu eingerichtet ist, eine Sitzlängsposition des Fahrzeugsitzes (200) zu speichern, die durch eine Längsverschiebung des Fahrzeugsitzes (200) verlassbar und wieder einnehmbar ist, wobei die Memory-Vorrichtung eine Relativbewegung zwischen der ersten Sitzschiene (2) und der zweiten Sitzschiene (4) mittels eines Reibrades (18) erfasst, welches hierzu eine relativ zur Memory-Vorrichtung bewegte Kontaktfläche (4a) kontaktiert und abfährt, wobei die Memory-Vorrichtung bei einem Wiedereinnehmen einer gespeicherten Sitzlängsposition wenigstens einen Sperrriegel (90, 91) zur Überführung des Sperrriegels (90, 91) in eine Blockierstellung freigibt, welcher in der Blockierstellung ein Verschieben der ersten Sitzschiene (2) relativ zur zweiten Sitzschiene (4) über die gespeicherte Sitzlängsposition hinaus verhindert,
**dadurch gekennzeichnet,**
**dass** ein Kraftfluss von dem in der Blockierstellung befindlichen Sperrriegel (90, 91) über ein Adapterblech (102) in die erste Sitzschiene (2) erfolgt.

2. Längseinsteller (1) gemäß Anspruch 1, wobei der wenigstens eine Sperrriegel (90, 91) wenigstens teilweise von einem Riegelgehäuse (104) umschlossen ist.

3. Längseinsteller (1) gemäß Anspruch 2, wobei der wenigstens eine Sperrriegel (90, 91) in dem Riegelgehäuse (104) geführt ist.

4. Längseinsteller (1) gemäß einem der Ansprüche 2 oder, wobei das Riegelgehäuse (104) mittels des Adapterblechs (102) mit der ersten Sitzschiene (2) verbunden ist.

5. Längseinsteller (1) gemäß einem der Ansprüche 1 bis 4, wobei der wenigstens eine Sperrriegel (90, 91) zum Einnehmen der Blockierstellung in eine Öffnung (100) der zweiten Sitzschiene (4) eingreift.

6. Längseinsteller (1) gemäß einem der Ansprüche 1 bis 5, wobei das Adapterblech (102) eine erste Ausnehmung (103a) aufweist.

7. Längseinsteller (1) gemäß Anspruch 6, wobei die erste Ausnehmung (103a) in Längsrichtung (x) orientiert ist.

8. Längseinsteller (1) gemäß einem der Ansprüche 6 oder 7, wobei die erste Ausnehmung (103a) zwischen einem Verbindungsbereich mit der ersten Sitzschiene (2) und einem Verbindungsbereich mit dem Riegelgehäuse (104) angeordnet ist.

9. Längseinsteller (1) gemäß einem der Ansprüche 1 bis 8, wobei das Adapterblech (102) eine zweite Ausnehmung (103b) aufweist, so dass eine Flexibilität wenigstens eines Verbindungsbereichs des Riegelgehäuses (104) mit dem Adapterblech (102) erhöht ist.

10. Längseinsteller (1) gemäß Anspruch 9, wobei die zweite Ausnehmung (103b) in einem Bereich zwischen zwei Verbindungsbereichen mit dem Riegelgehäuse (104) angeordnet ist.

11. Fahrzeugsitz (200) aufweisend ein Sitzteil (202), eine Lehne (204) und einen mit dem Sitzteil (202) verbundenen Längseinsteller (1) gemäß einem der vorhergehenden Ansprüche.
